# EUROPEAN PATENT APPLICATION

(11) **EP 2 544 139 A2**
(43) Date of publication of application: **09.01.2013**
(21) Application number: 12175448.5
(22) Date of filing: 06.07.2012
(51) Int. Cl.: G06Q 30/02

(54) **Apparatus and method for providing advertisement service in mobile communication system**

(30) Priority: 06.07.2011 KR 20110066750
(71) Applicant: Samsung Electronics Co., Ltd., Suwon-si, Gyeonggi-do, 443-742 (KR)
(72) Inventor: Kim, Sung-Chan, Gyeonggi-do (KR); Kim, Jae-Hwan, Gyeonggi-do (KR); Kim, Min-Chul, Gyeonggi-do (KR)
(74) Representative: Jenkins, Richard Gavin

(57) **Abstract**

An apparatus and method for linking a received advertisement to a scheduling function in a portable terminal through a mobile communication system for providing an advertisement service is provided. The apparatus includes a terminal for registering personal information in an information registration server when using the advertisement service and an advertisement server for registering and managing an advertisement of a sponsor, collecting the personal information of the terminal, which is registered in the information registration server, classifying an advertisement to be transmitted to the terminal, and transmitting the classified advertisement, wherein the terminal registers the advertisement received from the advertisement server in a schedule function.

## Description

### BACKGROUND OF THE INVENTION

### 1. Field of the Invention

The present invention relates generally to an advertisement service using a mobile communication system, and more particularly, to an apparatus and method for managing commerce data in a portable terminal.

### 2. Description of the Related Art

Portable terminals have become necessities of modern life for people of all ages. Thus, service providers and terminal manufacturers are competitively developing differentiated mobile products and services. As a result, the portable terminal has developed into a multimedia device capable of providing various services such as a phonebook service, a game service, a short message service, an e-mail service, an alarm clock service, an MPEG-1 Audio Layer 3 (MP3) service, a scheduling service, a digital camera service, a multimedia message service, and a wireless Internet service.

One recent development is the use of an electronic commerce ticket, which is provided through the Internet instead of a paper commerce ticket, which is printed on a paper. A user may use the electronic commerce ticket to purchase a corresponding product by providing a printed electronic commerce ticket or by providing the electronic commerce ticket by displaying a picture of the ticket on the portable terminal to a merchant. This is called a mobile commerce ticket, which may include an electronic gift card, an electronic coupon, and an electronic ticket. The mobile commerce ticket is used to obtain goods or discount the payment amount for purchasing goods. Also, the ticket may be used to gain admission to a physical space or for transport, by using the mobile commerce ticket instead of an airline ticket, a movie ticket, an event ticket, a railroad ticket, and the like.

There are a variety of mobile commerce tickets being developed and the number of the types of mobile commerce tickets is increasing. Accordingly, the user may need to store a plurality of mobile commerce tickets in the portable terminal.

However, if the user does not use the mobile commerce ticket within an effective period, it will be impossible to use the mobile commerce ticket after the effective period expires. Accordingly, the user must regularly check each of the mobile commerce tickets to utilize the mobile commerce ticket for purchasing goods or services.

In addition to the mobile commerce ticket functionality, the portable terminal may also receive and store Public Relations (such as the PR) information and event announcement of a message type. The user of the portable terminal must check information (PR information and event announcement) of the message type, which is stored in the portable terminal, through a message verification process, which lowers information checking efficiency. That is, there is a problem in that the user of the portable terminal may lose existing stored information or must check content details of the information through the message verification process. Accordingly, an apparatus and method for managing commerce data and received information in a portable terminal is needed.

### SUMMARY OF THE INVENTION

Accordingly, the present invention has been made to is to solve at least the above-mentioned problems and/or disadvantages and to provide at least the advantages below. Accordingly, an aspect of the present invention is to provide an apparatus and method for providing an efficient advertisement service in a mobile communication system.

Another aspect of the present invention is to provide an apparatus and method for registering a received advertisement in a scheduling function in a portable terminal.

Another aspect of the present invention is to provide an apparatus and method for including items of a received advertisement in a calendar in a portable terminal.

Another aspect of the present invention is to provide an apparatus and method for receiving an advertisement using phonebook information and a Social Network Service (SNS) in a portable terminal

According to an aspect of the present invention, a system for providing an advertisement service includes a terminal for registering personal information in an information registration server when using the advertisement service and an advertisement server for registering and managing an advertisement of a sponsor, collecting the personal information of the terminal, which is registered in the information registration server, classifying an advertisement to be transmitted to the terminal, and transmitting the classified advertisement, wherein the terminal registers the advertisement received from the advertisement server in a schedule function.

According to another aspect of the present invention, a method of providing an advertisement service in a mobile communication system includes registering personal information in an information registration server at a terminal when the terminal uses the advertisement service, registering and managing an advertisement of a sponsor, collecting the personal information of the terminal, which is registered in the information registration server, classifying an advertisement to be transmitted to the terminal, and transmitting the classified advertisement at an advertisement server, and registering the received advertisement in a schedule function at the terminal which receives the advertisement.

According to yet another aspect of the present invention, a portable terminal for providing an advertisement service includes an information registration unit for registering personal information in an information registration server, an advertisement management unit for registering an advertisement received from an advertisement server in a schedule function, a communication unit for transmitting the personal information to the information registration server and receiving the advertisement from the advertisement server, a display unit for outputting the advertisement received from the advertisement server, a memory for storing the advertisement received from the advertisement server, an input unit for receiving the personal information to be registered in the information registration server, and a controller for performing a control operation to register the received advertisement in the schedule function.

### BRIEF DESCRIPTION OF THE DRAWINGS

The above and other aspects, features and advantages of the present invention will be more apparent from the following detailed description taken in conjunction with the accompanying drawings, in which:
FIG. 1A is a block diagram illustrating a configuration of a mobile communication system for providing an advertisement service according to an embodiment of the present invention;
FIG. 1B is a block diagram illustrating a configuration of a portable terminal for linking an advertisement to a scheduling function according to an embodiment of the present invention;
FIG. 1C is a block diagram illustrating a configuration of an advertisement server for providing an advertisement according to an embodiment of the present invention;
FIG. 2 is a flowchart illustrating a process of providing an advertisement from an advertisement server to a client according to an embodiment of the present invention;
FIG. 3 is a flowchart illustrating a process of registering a received advertisement in a portable terminal according to an embodiment of the present invention;
FIG. 4 is a flowchart illustrating a process of providing an advertisement service in a mobile communication system according to an embodiment of the present invention;
FIG. 5A is a diagram illustrating a display for receiving a mobile coupon in a portable terminal according to an embodiment of the present invention;
FIG. 5B is a diagram illustrating a display for linking a received advertisement to a schedule function in a portable terminal according to an embodiment of the present invention;
FIG. 5C is a diagram illustrating a display for outputting detailed information of a previously registered advertisement in a portable terminal according to an embodiment of the present invention; and
FIG. 5D is a diagram illustrating a display for setting an advertisement registration service in a portable terminal according to an embodiment of the present invention.

### DETAILED DESCRIPTION OF EMBODIMENTS OF THE PRESENT INVENTION

Various embodiments of the present invention are described in detail with reference to the accompanying drawings. Detailed description of known functions or constructions are omitted to avoid obscuring the subject matter of the present invention.

The present invention is about managing commerce data in a portabble terminal. The commerce data includes advertisement information such as a mobile commerce ticket received from a sponsor server (advertisement server). Specifically, the present invention relates to an apparatus and method for linking received advertisement information to a scheduling function in a portable terminal.

Embodiments of the present invention provide an apparatus and method for registering a received advertisement in a schedule function and allowing a user to easily verify information of a received and stored advertisement to provide an efficient advertisement service according to the present invention. The advertisement includes information of PR materials, coupons, event announcement, and the like, generated by a sponsor.

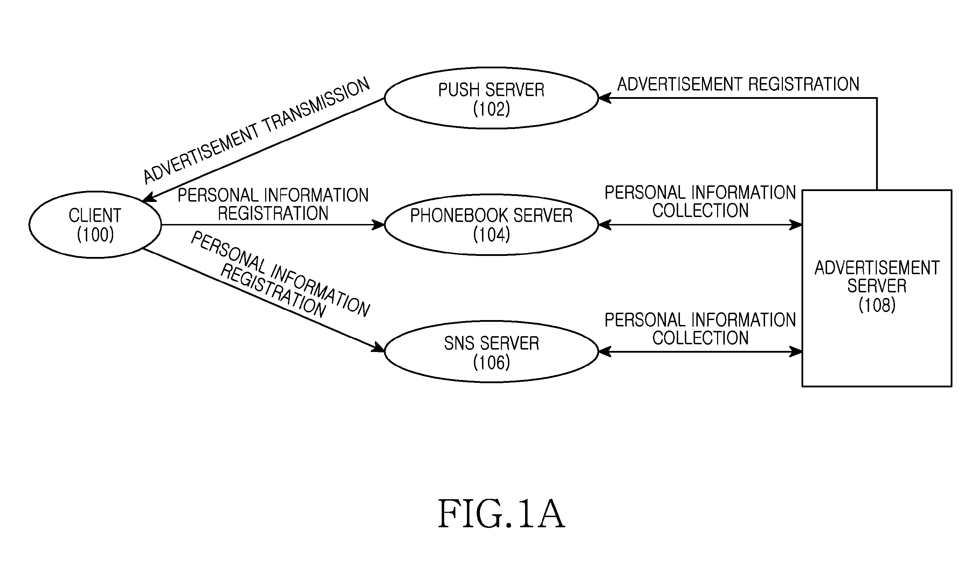

FIG. 1A is a block diagram illustrating a configuration of a mobile communication system for providing an advertisement service according to an embodiment of the present invention.

Referring to FIG. 1A, the mobile communication system may include a client 100, a push server 102, a phonebook server 104, an SNS server 106, and an advertisement server 108.

First of all, an advertisement includes information of PR materials, coupons, event announcement, etc. generated by a sponsor. The client 100 is an information device (an electronic device) capable of managing an advertisement service. The electronic device includes a mobile communication terminal, a mobile computer having communication function and a portable multimedia device.

The client 100 which wants to manage the advertisement service registers its own personal information in a server (e.g., the phonebook server 104 and the SNS server 106) capable of registering personal information. Herein, the personal information is used to classify advertisements by the advertisement server. The classified advertisements are to be transmitted to the corresponding client 100. The personal information may be phonebook information, visit store information, current position information of the client, etc. For example, the client 100 may provide contact information of sponsors registered in a phonebook, information of stores visited by a user of the client 100, and information of stores adjacent to an area where the client is positioned. The client 100 may receive an advertisement service (information) corresponding to a corresponding shop from the advertisement server 108.

A personal information registration process of the client 100 will be further described later. The client 100 may register a phone number of a sponsor in the phonebook server 104 by synchronizing previously stored phonebook information in the client with the phonebook server 104. Also, the client 100 may register phone numbers of sponsors in the phonebook server 104 by transmitting the phonebook information in the client to the phonebook server 104.

In addition, the client 100 may register information about a store visited by the user of the client 100 or information about its own current position in an SNS server 106.

The phonebook server 104 and the SNS server 106 store personal information of the client 100.

The advertisement server 108 manages advertisements registered by the sponsor, collects personal information of the client 100, and classifies an advertisement corresponding to the client 100.

The classified advertisement is registered in the push server 102. The push server 102 provides the registered advertisement to the corresponding client 100. Also, the push server 102 may be included in the advertisement server 108.

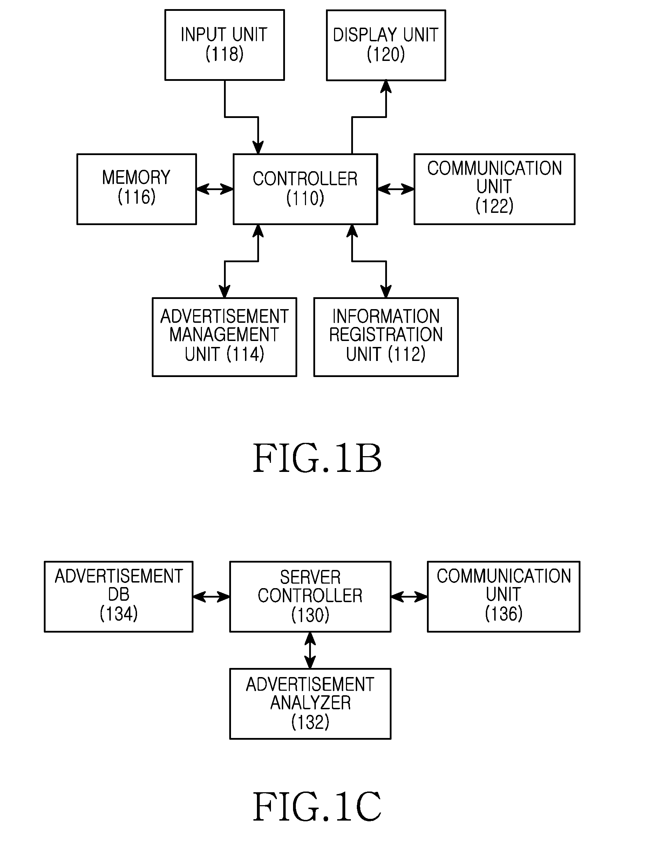

FIG. 1B is a block diagram illustrating a configuration of a portable terminal for linking an advertisement to a scheduling function according to an embodiment of the present invention.

Referring to FIG. 1B, the portable terminal may include a controller 110, an information registration unit 112, an advertisement management unit 114, a memory 116, an input unit 118, a display unit 120, and a communication unit 122.

The controller 110 of the portable terminal controls an overall operation of the portable terminal. For example, the controller 110 processes and controls voice communication and data communication. In addition to a conventional function, the controller 110 registers personal information for receiving an advertisement and links the received advertisement to a scheduling function.

The controller 110 registers a previously registered phone number, position information of the portable terminal, information of a store visited by a user of the portable terminal, etc. as the personal information for receiving the advertisement.

For example, the controller 110 may control to synchronizes a phone number with a phonebook server, may control to register information of a store visited by the user of the portable terminal or position information of the portable terminal in an SNS server using an SNS, and may receive an advertisement of a sponsor registered in the phone number, an advertisement of the store visited by the user of the portable terminal, and an advertisement of a store adjacent to an area where the portable terminal is positioned. Also, the controller 100 may control to register phone numbers of sponsors in the phonebook server 104 by transmitting the phonebook information in the client to the phonebook server 104.

Also, when the advertisement corresponding to the personal information is received, the controller 110 verifies attribute information of the received advertisement and registers the advertisement in a calendar of a scheduling function.

The method described hereunder of the present invention may be provided as one or more instructions in one or more software modules stored in the memory 116. The software modules may be executed by the controller 110.

The information registration unit 112 registers the personal information of the portable terminal under control of the controller 110. For example, the information registration unit 112 may synchronize a previously registered phone number with the phonebook server or may register position information of the portable terminal. The information registration unit 112 may be included in the controller 110.

The advertisement management unit 114 links an advertisement received from an advertisement server to a scheduling function under control of the controller 110. For example, the advertisement management unit 114 determines an advertisement period, an end time point, etc. of the received advertisement and includes the received advertisement in a calendar. Herein, the advertisement management unit 114 outputs information for informing a kind of the received advertisement together on the calendar. If it is sensed that a user selects a date or advertisement on the calendar, the advertisement management unit 114 outputs detailed information of the advertisement for the corresponding date. The advertisement management unit 114 may be included in the controller 110.

Further, the information registration unit 112 and/or the advertisement management unit 114 may be called as another controller(s).

The memory 116 includes a Read Only Memory (ROM), a Random Access Memory (RAM), and a flash ROM. The ROM stores a microcode of a program, by which the controller 110, the information registration unit 112, and the advertisement management unit 114 are processed and controlled, and a variety of reference data.

The RAM is a working memory of the controller 110 and stores temporary data that is generated from variety of executing programs. Also, the flash ROM stores a variety of rewritable data, such as phonebooks, outgoing messages, and incoming messages. The memory 116 receives and stores the advertisement corresponding to the personal.

The method executed by the information registration unit 112 and/or the advertisement management unit 114 may be provided as one or more instructions in one or more software modules stored in the memory unit 116. In that case, the software modules may be executed by the controller unit 110.

The input unit 118 includes numeric key buttons of '0' to '9' and a plurality of function keys such as a menu button, a cancel button, an OK button, a talk button, an end button, an Internet access button, a navigation key (or directional key) button, and a character input key. The input unit 118 provides a key input data corresponding to a key pushed by the user to the controller 110. In addition, the input unit 118 receives personal information corresponding to an advertisement to be received.

The display unit 120 displays state information which is generated while the portable terminal is operated, characters, large volumes of moving and still pictures, and the like. The display unit 120 may be a color Liquid Crystal Display (LCD), an Active Matrix Organic Light Emitting Diode (AMOLED), etc. The display unit 120 includes a touch input device. A touch sensitive display, called as a touch screen, may be used as the display unit 120. In this situation, touch input may be performed via the touch sensitive display.

In addition, the display unit 120 outputs the received advertisement linked to the scheduling function according to an embodiment of the present invention.

The communication unit 122 transmits and receives a Radio Frequency (RF) signal of data which is input and output through an antenna (not shown). For example, in a transmitting process, data to be transmitted is subject to a channel-coding process and a spreading process, and then the data is transformed to an RF signal. In a receiving process, the RF signal is received and transformed to a baseband signal, and the base-band signal is subject to a de-spreading process and a channel-decoding process, thereby restoring the data. In addition, the communication unit 122 sends the personal information for receiving an advertisement and receives the advertisement from the advertisement server.

The functions of the information registration unit 112 and the advertisement management unit 114 may be performed by the controller 110 of the portable terminal. However, the present invention includes the controller 110, the information registration unit 112, and the advertisement management unit 114 which are configurations for the convenience of explanation and are not limited to a scope of the prevent invention. It will be understood by those skilled in the art that various changes in form and details may be made therein without departing from the spirit and scope of the present invention. For example, all of them may be composed to be processed in the controller 110.

FIG. 1C is a block diagram illustrating a configuration of an advertisement server for providing an advertisement service according an embodiment of to the present invention.

Referring to FIG. 1C, the advertisement server may include a server controller 130, an advertisement analyzer 132, an advertisement DB 134, and a communication unit 136.

The server controller 130 of the advertisement server provides an advertisement to portable terminals which use an advertisement service. The server controller 130 receives and manages an advertisement of a sponsor and transmits the advertisement to a user who needs the advertisement.

The method described hereunder of the present invention may be provided as one or more instructions in one or more software modules stored in a storage device of the advertisement server. The software modules may be executed by the controller 130.

The advertisement analyzer 132 analyzes a previously stored advertisement and verifies the user who needs the advertisement. The advertisement analyzer 132 collects personal information registered by the user of the portable terminal and classifies advertisements corresponding to the personal information.

The advertisement DB 134 stores advertisements registered by the sponsor. Herein, each of the advertisements registered in the advertisement DB 134 may be advertisement content. Each of the advertisements may be a link indicating advertisement content and meta information of advertisement content. Also, the advertisement DB 134 is classified by a specific ID provided per sponsor. The advertisement DB 134 classifies sponsors and stores advertisements.

The communication unit 136 plays a role in communicating with the portable terminal. The communication unit 136 sends the advertisement classified by the advertisement analyzer 132 to the portable terminal according to an embodiment of the present invention. In addition, the communication unit 136 communicates with an SNS server, a phonebook server, etc., and receives personal information registered by the portable terminal.

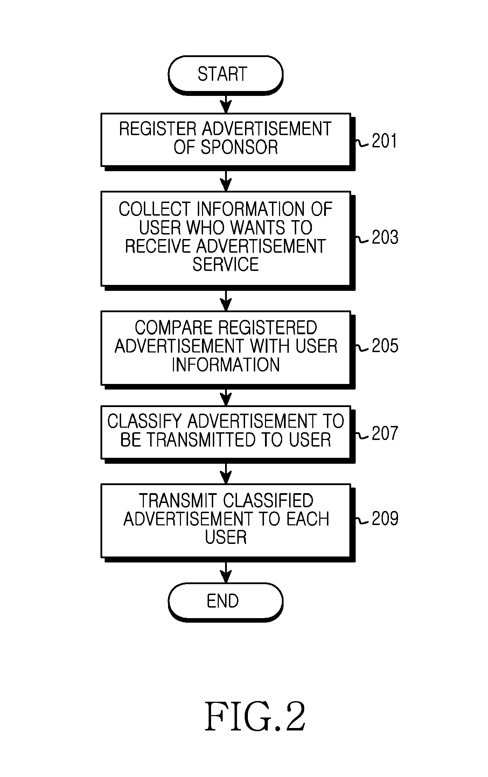

FIG. 2 is a flowchart illustrating a process of providing an advertisement from an advertisement server to a client according to an embodiment of the present invention.

Referring to FIG. 2, the advertisement server registers an advertisement of a sponsor in Step 201. Herein, the advertisement server provides a specific ID per sponsor who wants to register an advertisement and assigns an advertisement storage corresponding to a sponsor. In addition, each of the advertisements registered in the advertisement server includes information of PR materials, coupons, event announcement, etc. which are generated by a corresponding sponsor. Each of the advertisements may be advertisement content, a link indicating the advertisement content, and meta information of the advertisement content.

The advertisement server proceeds to Step 203 and collects information of a user who wants to provide an advertisement service. Herein, the advertisement server collects information for classifying advertisements which will be provided from a phonebook server, an SNS server, etc. to a portable terminal. Herein, the information of the user may be information of an area where the user is positioned, information about a store visited by the user, phone number information about a sponsor, etc.

Here, the information of the user and the personal information of the portable terminal are used as the same meaning to indicate the personal information of the client (portable terminal).

The Step 203 may be performed before the Step 201, or the Step 203 may be performed at a substantially same time with the Step 201.

The advertisement server proceeds to Step 205 and compares the collected information of the user with the registered advertisement. The advertisement server determines whether the user information which is identical to sponsor information of the previously registered advertisement exists.

For example, the advertisement server may verify whether sponsor information is included in phonebook information of a portable terminal, which is collected from the phonebook server. In addition, the advertisement server may determine whether a sponsor who is positioned around the portable terminal exists using position information or visit store information of the portable terminal, which is collected from the SNS server.

The advertisement server proceeds to Step 207 and classifies an advertisement to be transmitted to the user. The advertisement server classifies the advertisement corresponding to user information collected per user. The advertisement server proceeds to Step 209 and transmits the classified advertisement to each user. Here, the advertisement may also be called as the mobile commerce ticket or the mobile commerce data.

Thereafter, the advertisement server ends the algorithms of FIG. 2.

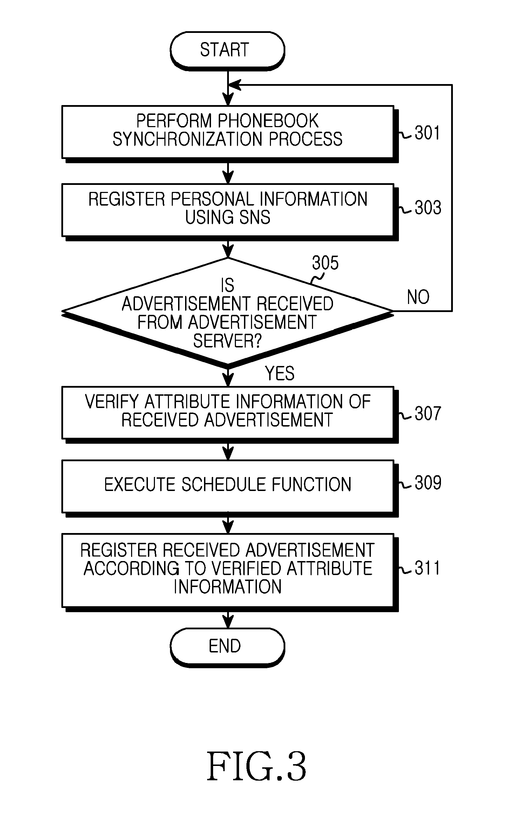

FIG. 3 is a flowchart illustrating a process of registering a received advertisement in a portable terminal according to an embodiment of the present invention.

Referring to FIG. 3, the portable terminal performs a phonebook synchronization process in Step 301. Herein, the portable terminal registers previously stored phonebook information in a phonebook server 104 to use the registered information as information for classifying an advertisement in an advertisement server. Also, the portable terminal may register phone numbers of sponsors in the phonebook server 104 by transmitting the phonebook information (phone numbers) in the portable terminal to the phonebook server 104.

The portable terminal proceeds to Step 303 and registers personal information using an SNS. In Steps 301 and 303, a user of the portable terminal registers the personal information. In Step 303, the user of the portable terminal may register information of an area where he or she is positioned using the SNS. In addition, in Step 303, the user of the portable terminal may register information of a store visited by him or her using the SNS.

The Step 303 may be performed before the Step 301, or the Step 303 may be performed at a substantially same time with the Step 301.

The portable terminal proceeds to Step 305 and determines whether an advertisement is received from the advertisement server. Herein, the advertisement server, as described above, classifies and transmits an advertisement corresponding to the user using the personal information of the user of the portable terminal.

If it is determined that the advertisement is not received from the advertisement server in Step 305, the portable terminal performs the processing after Step 301 to update changed personal information.

If it is determined that the advertisement is received from the advertisement server in Step 305, the portable terminal proceeds to Step 307 and verifies attribute information of the received advertisement, by analyzing an advertisement period including a due date, a category, etc. of the received advertisement. The category of the advertisement may be an event advertisement, a coupon, a PR advertisement, etc.

Here, the advertisement may also be called as the mobile commerce ticket or the mobile commerce data.

The advertisement period is, for example, the time period in which the coupon can be used. Therefore, the due date here means the final date at which for example, the coupon can be used.

The portable terminal proceeds to Step 309 and executes a schedule function to link the received advertisement to the schedule function. The portable terminal proceeds to Step 311 and registers (stores) the received advertisement according to the verified attribute information. The portable terminal verifies an advertisement period, an end period (due date), etc. of the received advertisement and registers an advertisement at a corresponding date. In addition, the portable terminal links the advertisement registered in the schedule function to an alarm function and informs the advertisement to the user in an advertisement end time point.

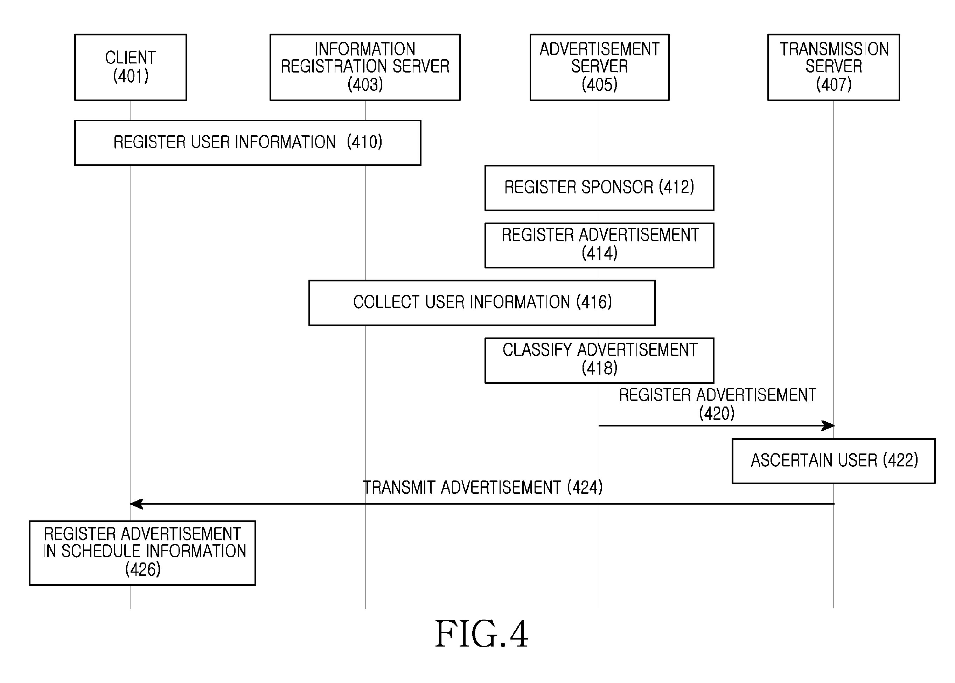

FIG. 4 illustrates a process of providing an advertisement service in a mobile communication system according to an embodiment of the present invention.

Referring to FIG. 4, the mobile communication system includes a client (user) 401, an information registration server 403, an advertisement server 405, and a transmission server 407. The client (user) 401 corresponds to the client 100, the information registration server 403 corresponds to the phone book server 104 and/or the SNS server, the transmission server 407 corresponds to th PUSH server, and the advertisement server 405 corresponds to the advertisement server 108.

The client 401 includes a plurality of portable terminals using an advertisement service. The information registration server 403 may include a phonebook server and an SNS server. In addition, the transmission server 407 includes a push server for providing an advertisement classified by the advertisement server 405 to the client 401.

The client 401 registers personal information of the user in the information registration server 403, in Step 410. The advertisement server 405 registers an advertisement written by a sponsor, in Step 414.

The client 401 periodically registers its own position, contact information of a sponsor of an advertisement to be received, etc. in the information registration server 403 using services such as Twitter®, Foursquare®, mini homepage, blog, and Facebook®. The advertisement server 405 registers each sponsor, in Step 412. The advertisement server 405 receives advertisement content from the sponsor and registers and manages the received advertisement content in Step 414. Herein, the advertisement server 403 may include an advertisement database for storing the advertisement content.

The advertisement server 405 collects personal information about the client 401 from the information registration server 403 in Step 416. The personal information collected by the advertisement server 405 may be position information of the client 401 and phonebook information registered in the client 401.

The aforementioned advertisement server 405 which collects the personal information classifies an advertisement corresponding to the personal information of the client 401 in Step 418. The advertisement server 405 classifies the advertisement to be transmitted to the client 401. The advertisement server 405 may classify an advertisement of a sponsor registered in phonebook information according to the client 401 and an advertisement of a store corresponding to a position of the client 401.

The advertisement server 405 registers the advertisement classified according to the client 401 in the transmission server 407 in Step 420.

Accordingly, the transmission server 407 determines the client user 401 corresponding to the registered advertisement in Step 422. The transmission server 407 transmits the advertisement to the determined client 401 in Step 424.

The client 401 which receives the advertisement registers the received advertisement in schedule information in Step 426. The client 401 determines attribute information such as an advertisement period, an advertisement type, etc. and registers the determined attribute information in a period on a schedule function.

Here, the advertisement may also be called as the mobile commerce ticket or the mobile commerce data.

Also, in Fig. 4, the transmission server 407 may be included in the advertisement server. In this situation, the performances in the advertisement server 405 and the transmission server 407 are performed in the advertisement server 405.

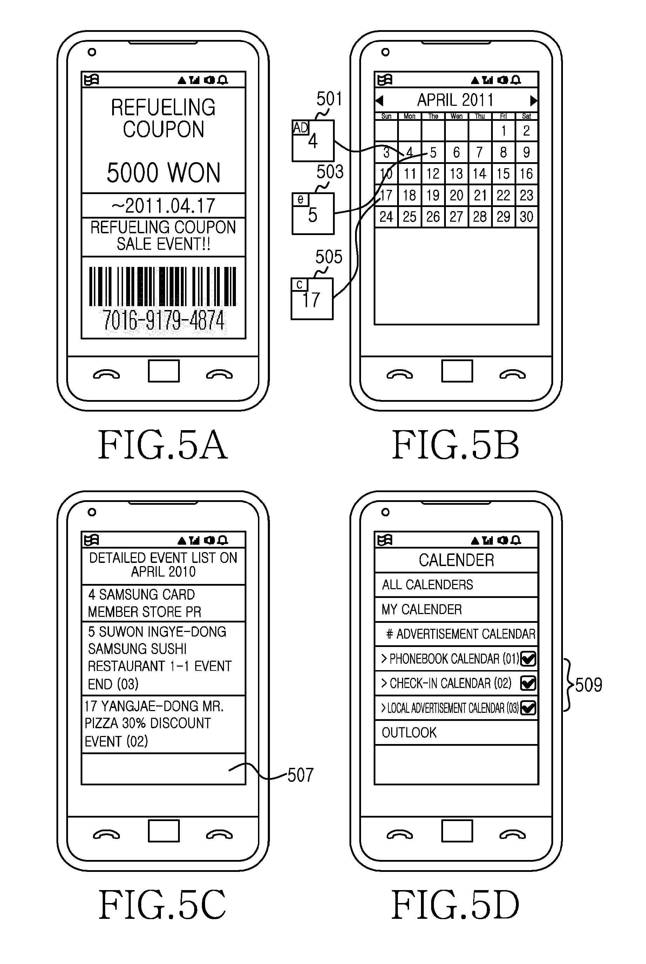

FIG. 5 illustrates advertisement registration displays of a portable terminal according to an embodiment of the present invention.

FIG. 5A illustrates a display for receiving a mobile coupon in a portable terminal according to an embodiment of the present invention. The mobile coupon may be called as the mobile commerce data or the advertisement.

Referring to FIG. 5A, the portable terminal receives a refueling coupon as a mobile coupon or a mobile commerce ticket which is purchased or provided free from a sponsor and outputs the received refueling coupon. A mobile commerce ticket such as the refueling coupon includes imaged code information (e.g., Quick Response (QR) code information or bar-code information) and text information. The code information and the text information include information of the refueling coupon. The refueling coupon provides content for informing the refueling coupon and use period information corresponding to a use period of the refueling coupon using the text information and the bar-code information. In general, a mobile coupon is stored in a specific storage such as a message storing box. A user of the portable terminal checks the text information and must use the refueling coupon within a use period. If the user of the portable terminal does not use the refueling coupon within the use period, it is impossible to use the refueling coupon after the use period expires which poses a problem in that the user of the portable terminal directly executes the mobile coupon stored in the storage and must check the use period.

FIG. 5B illustrates a display for linking a received advertisement to a schedule function in a portable terminal according to an embodiment of the present invention.

Referring to FIG. 5B, the portable terminal, as illustrated in FIG. 5A, determines attribute information of a received advertisement (e.g., a mobile coupon, an advertisement, event PR information, etc.). Herein, the attribute information includes an advertisement type, an advertisement period, an advertisement end time point (due date or due hour), advertisement content, etc. The portable terminal links the received advertisement to the schedule function.

The portable terminal performing the above-described linking process executes the schedule function. The portable terminal verifies information about the advertisement period or the advertisement end time point in the attribute information of the advertisement, searches a date of a schedule function, which is identical to the verified information, and registers an advertisement received at a date of the schedule function.

Assuming that the portable terminal receives a store advertisement in which an advertisement end period (advertisement due date) is 4^{th}, event PR information in which an advertisement end period is 5^{th}, and a mobile coupon in which an advertisement end period is 17^{th}, it includes information indicating that advertisements ended at 4^{th}, 5^{th}, and 17^{th} on a calendar output according to a schedule function exist.

The portable terminal may include a "C" icon for informing a coupon at a date included on the calendar, an "AD" icon for informing an advertisement at a date included on the calendar, and an "e" icon for informing event PR information at a date included on the calendar. The portable terminal may display that the advertisement (501) was registered and ending on April 4^{th}, and may display that the event (503) was registered and ending on April 5^{th}, and that the mobile coupon (505) was registered and ending on April 17^{th}. Reference numbers 501, 503, and 505 illustrated in FIG. 5B denote enlarged dates at which the advertisements are registered on the calendar output on the portable terminal. The portable terminal may generate an alarm for an advertisement ending or an advertisement starting, by using an alarm function.

FIG. 5C illustrates a display for outputting detailed information of a previously registered advertisement in a portable terminal according to an embodiment of the present invention.

Referring to FIG. 5C, the portable terminal, as illustrated in FIG. 5C, may output detailed information of a previously registered advertisement (507). As illustrated in FIG. 5B, because a date region of the calendar is narrow, it may not include detailed information of an advertisement. Accordingly, the portable terminal provides detailed information of the registered advertisement upon request of a user. The portable terminal may provide detailed information of a registered advertisement, classified according to months, weeks, and days.

FIG. 5D illustrates a display for setting an advertisement registration service in a portable terminal according to an embodiment of the present invention.

Referring to FIG. 5D, the portable terminal, as illustrated in FIG. 5D, may link a received advertisement to a schedule function.
Here, the advertisement may also be called as the mobile commerce ticket or the mobile commerce data
Herein, the portable terminal may link the schedule function to the advertisement according to personal information of a user. For example, the portable terminal provides a function for linking the received advertisement such as an advertisement calendar item to the schedule function.

The function may be classified into a function for receiving an advertisement needed by a user of the portable terminal using phone number information of the portable terminal, a function for receiving an advertisement for a store visited by the user of the portable terminal, and a function for receiving an advertisement of an area around the portable terminal.

The received advertisement is linked to the schedule function and is registered at a corresponding date. The portable terminal may classify and receive an advertisement needed by the user according to selection of the user.

As illustrated in FIG. 5D, the user of the portable terminal sets that an advertisement will be received using a phone number, a store visit (check-in), and local information, among advertisement calendar functions (509). The portable terminal indicates that one advertisement received using the phone number is linked to the schedule function and indicates that two advertisements received using the store visit are linked to the schedule function. In addition, the portable terminal indicates that three advertisements received using the local information are linked to the schedule function.

It will be appreciated that embodiments of the present invention can be realized in the form of hardware, software or a combination of hardware and software. Any such software may be stored in the form of volatile or nonvolatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Accordingly, the present invention provides an efficient advertisement service in a mobile communication system. The present invention registers a received advertisement in a schedule function and allows a user to easily verify information of a received and stored advertisement.

While the present invention has been shown and described with reference to various embodiments thereof, it will be understood by those skilled in the art that changes in form and detail may be made without departing from the spirit and scope of the present invention as defined by the appended claims.

## Claims

1. A method for managing mobile commerce data in an electronic device, the device comprising:
receiving mobile commerce data from a server; and
displaying schedule function wherein a due date of the mobile commerce data is registered in the schedule function.

2. The method of claim 1, wherein attribute information of the received mobile commerce data is further registered in the schedule function.

3. The method of claim 2, wherein the attribute information of the received mobile commerce data includes at least one of an advertisement period, an advertisement end time point, and advertisement content of the received advertisement and wherein the advertisement includes at least one of public relations materials, coupons, and event announcements generated by the sponsor.

4. The method of claim 1, wherein registration of the received mobile commerce data in the schedule function comprises linking the mobile commerce data registered in the schedule function to an alarm function.

5. The method of claim 1, wherein before the step of receiving mobile commerce data, a step of registration of the personal information of the electronic device in the server is performed.

6. The method of claim 5, wherein the personal information comprises at least one of registering phonebook information of the electronic device and registering position information of the electronic device.

7. The method of claim 1, wherein the schedule function is a calendar function.

8. The method of claim 1, wherein schedule function includes classification of the mobile commerce data according to the category of the mobile commerce data.

9. The method of claim 1, wherein schedule function includes detailed information of the mobile commerce data.

10. An electronic device for managing mobile commerce data, the device comprising:
a storage unit;
one or more a controllers;
one or more modules stored in the storage unit and configured for execution by the processor, the one or more modules including instructions;
to receive mobile commerce data from a server; and
to display schedule function wherein a due date of the mobile commerce data is registered in the schedule function.

11. The electronic device of claim 10, wherein attribute information of the received mobile commerce data is further registered in the schedule function.

12. The electronic device of claim 11, wherein the attribute information of the received mobile commerce data includes at least one of an advertisement period, an advertisement end time point, and advertisement content of the received advertisement and wherein the advertisement includes at least one of public relations materials, coupons, and event announcements generated by the sponsor.

13. The electronic device of claim 10, wherein registration of the received mobile commerce data in the schedule function comprises linking the mobile commerce data registered in the schedule function to an alarm function.

14. The electronic device of claim 10, wherein before the step of receiving mobile commerce data, a step of registration of the personal information of the electronic device in the server is performed.

15. A computer readable storage medium storing one or more programs, the one or more programs comprising instructions, which when executed by an electronic device with a display, cause the portable electronic device to perform a method of claim 1.
